# DEMANDE DE BREVET EUROPEEN

(11) **EP 0 745 421 A1**
(43) Date de publication de la demande: **04.12.1996**
(21) Numéro de dépôt: 96401119.1
(22) Date de dépôt: 23.05.1996
(51) Int. Cl.: B01D 53/50, B01D 53/68, B01D 53/75, B01D 53/74

(54) **Epurateur de fumée par flux croisé avec du lait de chaux ou de calcaire**

(30) Priorité: 29.05.1995 FR 9506323
(71) Demandeur: Cdf INGENIERIE, 57802 Freyming-Merlebach (FR)
(72) Inventeur: Segaud, Jean-Pierre, 57800 Freyming-Merlebach (FR)
(74) Mandataire: Rinuy, Santarelli

(57) **Abrégé**

Une installation d'épuration de fumées de chaudières, comporte :
- un conduit (21) de circulation de fumées s'étendant depuis une zone d'entrée de fumées (22) jusqu'à une zone de sortie de fumées (23) et comportant une pluralité d'au moins trois étages d'absorption ayant chacun une direction de circulation de fumées au moins approximativement horizontale, chaque étage comportant une boucle de circulation de lait comportant un élément de pulvérisation (27-2 ...), une zone de réception (C2 . . .) , et des moyens de pompage (31-2), cette zone de réception étant située sur une voie (30) d'évacuation de trop-plein et ayant un niveau de lait et une concentration en calcaire/chaux inférieurs à ceux de l'étage qui le suit mais supérieurs à ceux de circulation de l'étage qui le précède, chaque boucle étant connectée à une ligne d'introduction de calcaire/chaux et à une ligne d'injection d'air/oxygène.

## Description

L'invention concerne un absorbeur destiné à épurer par lait de chaux ou de calcaire (c'est-à-dire un liquide formé de particules très fines de chaux ou de calcaire en suspension dans de l'eau) les fumées issues de chaudières brûlant du charbon, des ordures ménagères, du fuel ou autre combustible libérant dans les fumées de combustion des polluants tels qu'en particulier des oxydes de soufre, du chlore et ses composés, du fluor et ses composés, voire des métaux lourds, etc. (l'invention ne se préoccupe pas de l'élimination des oxydes d'azote).

Les absorbeurs actuels à lait de chaux ou de calcaire se présentent sous forme de tours verticales cylindriques ou rectangulaires. Pour les tours cylindriques, le diamètre peut atteindre 17 ou 18 m et la hauteur une cinquantaine de mètres.

On connaît plusieurs modes de fonctionnement.

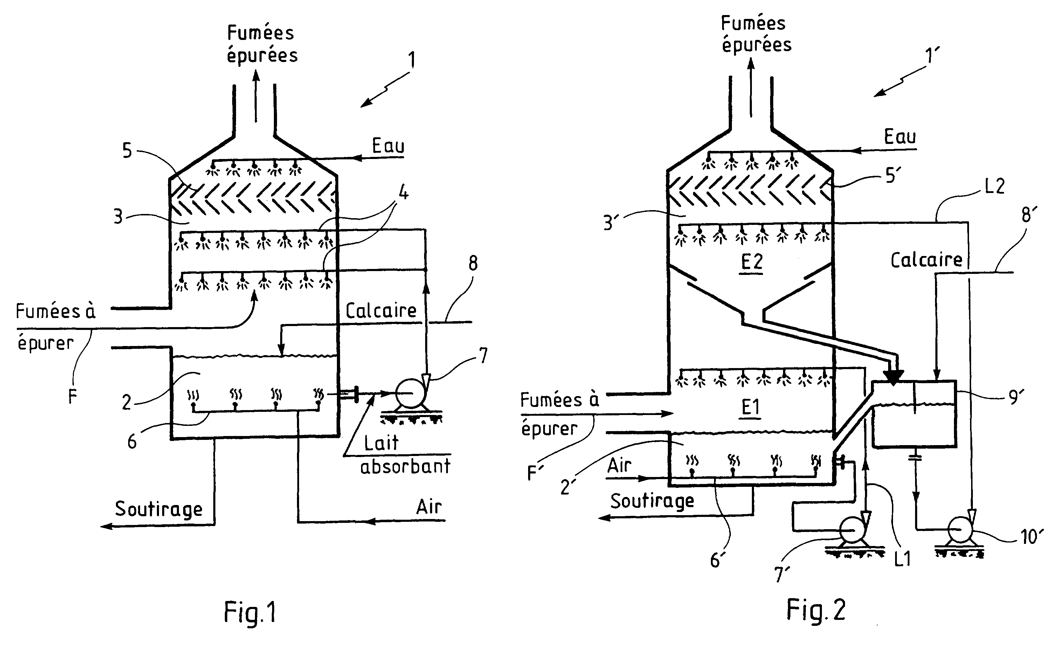

La figure 1 correspond à un fonctionnement à contre courant.

Dans ce cas, les fumées à traiter F entrent dans l'absorbeur 1 juste au-dessus du niveau du pied 2 de l'absorbeur qui forme rétention pour du lait absorbant contenant de la chaux ou du calcaire et du sulfate et sulfite de calcium.

Ces fumées montent dans l'absorbeur à contre courant avec du lait absorbant qui est pulvérisé en tête 3 de l'absorbeur par une ou plusieurs rampes de pulvérisation 4.

Durant ce contact à contre courant entre les fumées et le lait absorbant, les éléments polluants amenés par les fumées sont absorbés et réagissent avec le calcaire présent dans le lait.

Après passage sur un dévisiculeur 5 lavé à l'eau, les fumées sortent de l'absorbeur en point haut, épurées. Le lait absorbant s'écoule dans la rétention 2 du pied d'absorbeur. Du calcaire sous forme de lait y est ajouté par une ligne 8 en fonction des quantités de polluants à traiter.

De l'air est injecté par une rampe 6 dans la rétention en pied d'absorbeur pour oxyder en sulfate de calcium le sulfite de calcium formé dans le lait par réaction avec les composés soufrés contenus dans les fumées.

Le lait absorbant est recirculé en tête de l'absorbeur par un groupe de pompage 7.

Un soutirage de lait absorbant en excès se fait depuis le pied de l'absorbeur par une ligne 8. Ce lait soutiré est ensuite traité.

Dans le cas de traitement des fumées de centrales charbon ou fuel, le lait soutiré contient un solide dont la majeure partie est du gypse qui peut être valorisable. Ce gypse est récupéré dans un atelier de traitement du lait soutiré.

Les rendements ainsi obtenus pour la désulfuration des fumées peuvent atteindre 90 % et plus.

Il est possible de limiter la consommation de calcaire à seulement 1,02 fois la stoechiométrie nécessaire par rapport aux polluants (SO₂, Cl, F). Pour ceci la concentration en calcaire dans le lait soutiré doit être faible (puisque le calcaire présent dans le soutirage est perdu) et par conséquent la concentration en calcaire doit être faible dans le lait absorbant distribué en tête d'absorbeur. Les chlorures apportés par les fumées réagissent très bien avec le lait absorbant et se retrouvent sous forme de chlorure de calcium soluble dans le lait absorbant. Mais cette présence d'ions, chlorures et calcium, de même que la faible concentration en calcaire, ont une influence négative sur la vitesse de dissolution du calcaire dans la phase liquide du lait absorbant donc sur l'efficacité de la captation du SO₂. De ce fait, des débits très importants d'arrosage des fumées par lait absorbant doivent être mis en oeuvre (15 à 20 l de lait absorbant par m³ de fumée à traiter).

Cette installation a ainsi les inconvénients suivants :
- pollution de la totalité de l'appareil par les ions chlorures, ions chlorures qui se retrouvent ensuite dans le lait soutiré et polluent le gypse qui s'y trouve et qui devra être lavé avant commercialisation,
- faible concentration en calcaire du lait absorbant si l'on veut avoir une consommation minimale de calcaire et une absence de pollution du gypse marchand par le calcaire,
- très gros débit d'arrosage par lait absorbant exigeant la mise en oeuvre d'équipements imposants et chers,
- difficultés d'accès de l'absorbeur pour des visites de vérification de l'état intérieur,
- installations très importantes atteignant 50 m de hauteur et plus, donc très chères.

La figure 2 illustre une installation à contre courant à 2 étages (les chiffres de référence de la figure 1 y sont repris avec ajout de l'indice "prime").

Une amélioration du système précédent a été de proposer un absorbeur à deux étages selon la figure 2.

Dans ce système, les fumées à épurer F' entrent en pied de l'absorbeur 1' dans un étage inférieur E1 et rencontrent le lait absorbant d'une boucle inférieure L1 qui a une faible concentration en calcaire comme dans le cas précédent. Les chlorures et fluorures sont absorbées à ce niveau. Les fumées passent ensuite dans un étage supérieur E2 où elles sont à contre courant avec le lait absorbant d'une boucle supérieure L2 dont la concentration en calcaire est plus élevée.

Le lait de la boucle L2 transite par une cuve 9' extérieure à l'absorbeur d'où il est repris par un groupe de pompage 10' pour alimenter la tête de l'absorbeur. Du lait de calcaire est introduit par la ligne 8' dans cette cuve extérieure. L'excédent de lait absorbant de la cuve extérieure après réaction dans l'étage E2 s'écoule dans le volume de rétention 2' de la boucle L1 dans le pied de l'absorbeur.

Cette disposition en deux étages permettrait semble-t-il d'abaisser le débit global de circulation de lait absorbant à de l'ordre de 10 l/m³ de fumées à traiter. Ceci aurait une influence sur la taille des équipements et la puissance de pompage consommée. De meilleurs rendements d'absorption sont obtenus.

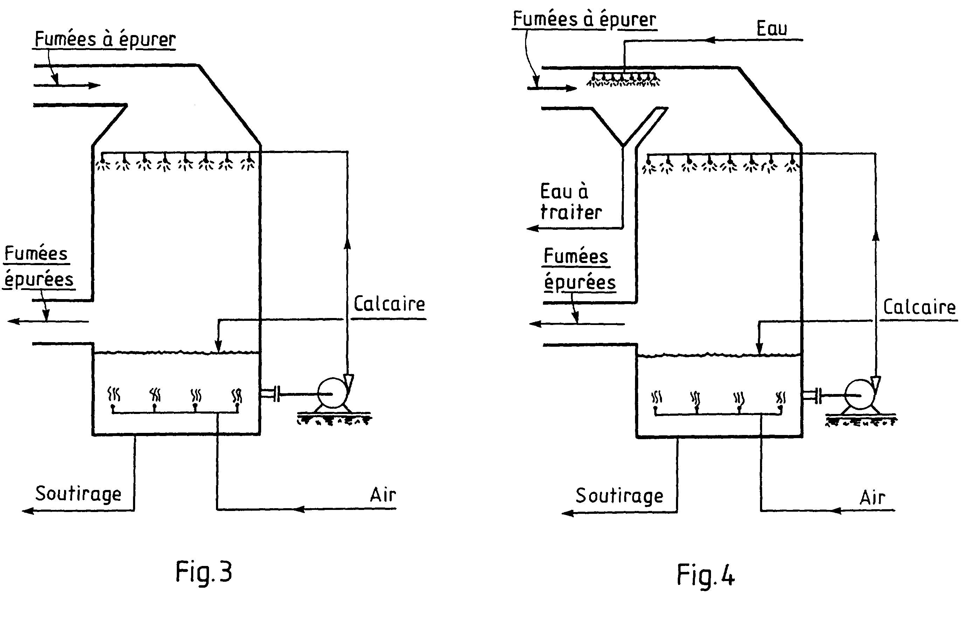

La figure 3 illustre le principe d'un système à co-courant, dans lequel les fumées et le lait absorbant circulent à co-courant. Les avantages de cette disposition résideraient en une perte de charge plus faible côté fumées. Par contre, il n'est pas sûr que les rendements d'épuration soient aussi bons.

Enfin, par analogie avec la figure 2, la figure 4 illustre le principe d'un système à co-courant à deux étages se distinguant de celui de la figure 3 par un lavage préliminaire des fumées qui permet d'éliminer à ce stade chlorures et fluorures.

Le matériau de construction de l'absorbeur le plus souvent rencontre est l'acier au carbone revêtu caoutchouc.

Des constructions en acier au carbone revêtu d'un placage en acier inox haute qualité existent également.

Les figures 1 à 4 représentent les technologies fréquemment rencontrées, réalisées ou simplement envisagées. Des variantes de détail existent mais n'apportent pas une différence fondamentale. D'autres technologies existent mettant en oeuvre d'autres mécanismes que l'absorption des polluants par un lait de chaux ou de calcaire (procédé à l'ammoniaque, procédé par ionisation), mais elles sont totalement différentes et n'entrent pas dans le champ d'action technique de la présente invention.

L'invention a pour objet de pallier les inconvénients précités à propos des épurateurs de fumées à circulation de lait de chaux ou de calcaire, grâce à un épurateur de ce type :
- qui permette une épuration efficace aussi bien des chlorures et fluorures que des sulfures, avec une consommation modérée de calcaire et la mise en oeuvre de débits modérés de pulvérisation de lait,
- qui offre un accès aisé, soit pour les visites, soit pour les remplacements de tels ou tels éléments défectueux,
- qui offre de préférence la possibilité de s'adapter à la nature et au degré de pollution des fumées à traiter, ainsi qu'au niveau d'épuration visé, soit en modifiant les paramètres de mise en oeuvre, soit en modifiant la structure.

L'invention propose à cet effet une installation d'épuration de fumées de chaudières, comportant :
- un conduit de circulation de fumées s'étendant depuis une zone d'entrée de fumées jusqu'à une zone de sortie de fumées et comportant un étage amont d'absorption et un étage aval d'absorption,
- une boucle amont de circulation de lait absorbant comportant un élément amont de pulvérisation situé en une partie haute de l'étage amont, une zone amont de réception communiquant avec une partie basse de l'étage amont, et des moyens amont de pompage pour faire recirculer du lait depuis la zone amont de réception jusqu'à l'élément amont de pulvérisation,
- une boucle aval de circulation de lait absorbant comportant un élément aval de pulvérisation situé en une partie haute de l'étage aval, une zone aval de réception communiquant avec une partie basse de cet étage aval, et des moyens aval de pompage pour faire recirculer du lait depuis la zone aval de réception jusqu'à l'élément aval de pulvérisation,
- une ligne d'introduction de calcaire/chaux connectée à la boucle aval,
- une ligne d'injection d'air/oxygène connectée à la zone amont de réception,
- une ligne de soutirage de lait connectée à cette zone amont de réception,
- une voie d'évacuation de trop-plein partant de la zone aval de réception de la boucle aval à un niveau supérieur au niveau du lait dans la zone amont de réception et communiquant avec celle-ci,

cette installation étant caractérisée en ce que :
- le conduit de circulation de fumées est formé d'une pluralité d'au moins trois étages d'absorption comportant lesdits étages amont et aval et au moins un étage intermédiaire, chaque étage d'absorption ayant une direction de circulation de fumées au moins approximativement horizontale,
- chaque étage intermédiaire comporte une boucle intermédiaire de circulation de lait comportant un élément intermédiaire de pulvérisation situé en partie haute, une zone intermédiaire de réception communiquant avec une partie basse de cet étage intermédiaire, et des moyens intermédiaires de pompage pour faire recirculer du lait depuis cette zone intermédiaire de réception jusqu'à cet élément de pulvérisation, cette zone intermédiaire de réception étant située sur la voie d'évacuation de trop-plein et ayant un niveau de lait et une concentration en calcaire/chaux inférieurs au niveau de lait et à la concentration dans la boucle de circulation de l'étage qui le suit mais supérieurs au niveau et à la concentration en calcaire-chaux dans la boucle de circulation de l'étage qui le précède,
- chaque boucle intermédiaire est connectée à une ligne d'introduction de calcaire/chaux et à une ligne d'injection d'air/oxygène.

Selon des enseignements préférés de l'invention, éventuellement combinés :
- le conduit de circulation de fumées est globalement horizontal, lesdits étages d'absorption étant disposés sensiblement au même niveau,
- le conduit de circulation de fumées a une forme globale en U,
- un échangeur thermique met éventuellement en communication thermique les zones d'entrée et de sortie de fumées,
- le conduit de circulation de fumées comporte deux branches adjacentes séparées par une paroi,
- chaque zone de réception comporte des moyens d'agitation,
- chaque zone de réception est connectée à la ligne d'introduction de calcaire/chaux et à la ligne d'injection d'air/oxygène,
- un étage de prélavage est prévu entre la zone d'entrée et l'étage amont d'absorption, cet étage de prélavage comportant une boucle de recirculation avec un moyen de pulvérisation, une zone de rétention connectée à une source d'eau et une source de calcaire/chaux et des moyens de pompage,
- chaque zone de réception est située sensiblement à la verticale sous l'étage auquel elle est connectée,
- le conduit de circulation est monté sur pilotis au-dessus du niveau du sol.

On appréciera que la circulation croisée du lait (circulation en principe verticale de haut en bas) et des fumées (circulation transversale, selon une direction globalement horizontale) offre un accès aisé aux entrailles du dispositif épurateur. La succession de boucles de lait de calcaire ou de chaux dont la charge en calcaire ou en chaux diminue depuis l'aval en direction de l'amont de la circulation des fumées garantit à la fois un bon niveau de performances, une faible consommation en calcaire car du lait est soutiré pour traitement dans une boucle faiblement chargée, et une possibilité de s'adapter aux besoins du moment (il est possible de moduler séparément les divers débits de circulation des boucles, voire d'en arrêter certaines si le volume des fumées à traiter, ou le niveau d'épuration requis viennent à baisser). La disposition en U du conduit de fumées a l'avantage d'optimiser l'installation d'un éventuel échange thermique entre l'entrée et la sortie (qui sont à proximité l'une de l'autre) ; elle permet en outre de modifier aisément la longueur utile de conduit, soit en rajoutant, soit en neutralisant des paires d'étages contigus d'épuration (cela est d'autant plus facile que les branches du conduit en U sont proches l'une de l'autre) : il y a donc un aspect modulaire, dont la mise à profit peut par exemple se faire à l'aide de simples cloisons mobiles entre étages adjacents ou entre étages successifs.

Des objets, caractéristiques et avantages de l'invention ressortent de la description qui suit, donnée à titre d'exemple non limitatif, en regard des dessins annexés sur lesquels :
- la figure 1 est un schéma de principe d'une installation d'épuration connue à un étage et à contre-courant,
- la figure 2 est un schéma de principe d'une autre installation connue à deux étages et à contre-courant,
- la figure 3 est un schéma de principe d'une autre installation connue à un étage à co-courant,
- la figure 4 est un schéma de principe d'encore une autre installation connue à deux étages et à co-courant,
- la figure 5 est une vue schématique de dessus d'une installation conforme à l'invention,
- la figure 6 en est une vue schématique en coupe transversale, selon la ligne VI-VI de la figure 5,
- la figure 7 en est une vue schématique en coupe longitudinale selon la ligne brisée VII-VII de la figure 5, et
- la figure 8 est un graphique corrélant les évolutions de la teneur en sulfure des fumées et la teneur en calcaire du lait au fur et à mesure que les fumées circulent dans l'installation d'épuration.

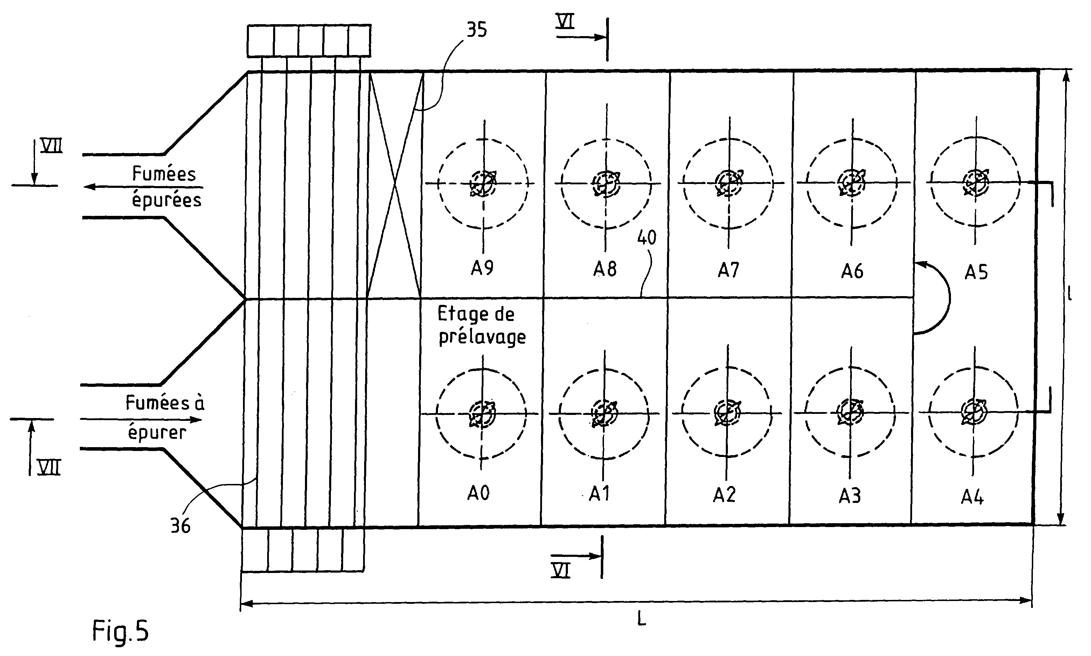

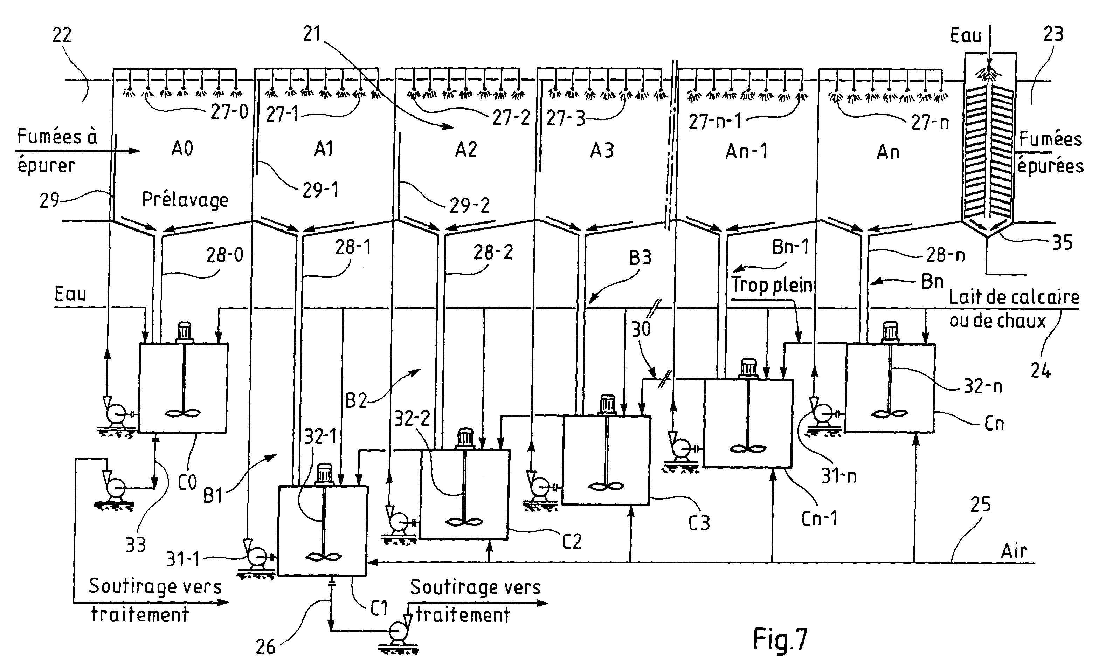

L'installation d'épuration repérée sous la référence 20 dans son ensemble aux figures 5 à 7 comporte principalement :
- un conduit de circulation de fumées 21 s'étendant depuis une zone d'entrée de fumées 22 jusqu'à une zone de sortie de fumées 23 et comportant une pluralité de n étages d'absorption A1 à An (n = 9 à la figure 5) ;
- une boucle B1 (respectivement B2 ... Bn) de circulation de lait absorbant pour chaque étage d'absorption ;
- un réseau 24 d'introduction de calcaire/chaux (il s'agit ici d'une ligne unique) ;
- un réseau 25 d'injection d'air/oxygène (il s'agit ici d'une même ligne) ;
- une ligne 26 de soutirage de lait connectée à une installation de traitement non représentée de tout type connu approprié.

Le nombre d'étages du conduit de circulation de fumées 21 est au moins égal à 3, avec un étage amont A1, un étage aval An et au moins un étage intermédiaire (A2 .... An-1).

Dans chaque étage la direction de circulation des fumées est sensiblement horizontale.

De manière préférée les étages sont tous au même niveau (en variante il pourrait y avoir une succession en escalier).

En outre le conduit de circulation est de préférence conformé en U, en sorte d'avoir de manière préférée les zones d'entrée et de sortie à proximité immédiate l'une de l'autre.

Les étages sont ici de section rectangulaire ou carrée.

La boucle de circulation de chaque étage d'absorption comporte un ensemble de rampes de pulvérisation 27-1 à 27 n placées au niveau du toit de la chambre et éventuellement à des hauteurs intermédiaires ainsi qu'une tuyauterie 28-1 à 28-n d'évacuation dans le plancher. La forme du plancher rassemble les liquides de l'étage vers cette tuyauterie d'évacuation. Entre chaque étage d'absorption, des cloisons formant chicanes 29-1 .... peuvent être installées (hauteur à déterminer en fonction des paramètres de fonctionnement et des résultats recherchés). Ces cloisons ou seuils sont destinés à créer des turbulences dans le flux des fumées et à homogénéiser ces fumées. Elles sont de préférence installées en labyrinthe (un passage en haut suivi d'un passage en bas) pour éviter les chemins préférentiels.

Un ensemble de cuves agitées C1 ... Cn, munies de moyens d'agitation 21-1 ... est placé sous la chambre d'absorption. Il y a une cuve agitée par étage d'absorption. A chaque étage, la tuyauterie 28-1 ... d'évacuation en point bas de la chambre d'absorption plonge dans la cuve agitée, sous le niveau de lait liquide pour former étanchéité par garde hydraulique. Les différentes cuves agitées sont placées à des altitudes décroissantes de l'aval vers l'amont, la plus haute étant celle du dernier étage pour permettre au liquide en excès de s'écouler, par voie d'évacuation de trop-plein 30 en plusieurs tronçons, d'étage en étage depuis la cuve du dernier étage jusqu'à la cuve du 1er étage.

Un groupe de pompage 31-1 ...reprend le liquide contenu dans la cuve agitée pour l'envoyer via des tuyauteries dans les rampes de pulvérisation de la chambre d'absorption. Il y a autant de groupes de pompage qu'il y a d'étages d'absorption.

Le réseau 24 de tuyauteries pour la distribution de lait de calcaire débouche dans chaque cuve agitée ; de même le réseau 25 de distribution d'air surpressé débouche dans chaque cuve agitée.

Le nombre d'étages est fonction des teneurs en polluants dans les fumées à épurer et de l'efficacité des étages, des teneurs recherchées dans les fumées épurées.

Chaque étage est traversé horizontalement par les fumées à épurer et verticalement par le lait absorbant qui est pulvérisé dans la cellule d'absorption. Il y a donc une circulation croisée.

Pendant ce contact entre fumées et lait absorbant, les polluants contenus dans les fumées sont absorbés par le lait absorbant.

Le lait absorbant s'écoule par la tuyauterie d'évacuation dans la cuve agitée qui se trouve sous l'étage d'absorption.

Dans cette cuve agitée du lait de calcaire ou de chaux est apporté en fonction des polluants à absorber. De l'air peut également être injecté dans cette cuve pour oxyder les sulfites et bisulfites de calcium en sulfate de calcium.

La quasi totalité du lait de calcaire ou de chaux est apportée dans les derniers étages d'absorption. La quasi totalité de l'air est injectée dans les premiers étages d'absorption.

Le volume excédentaire de lait absorbant s'écoule par gravité (ou par un moyen de transfert) de la cuve de l'étage n vers la cuve de l'étage n-1.

Les fumées à épurer issues de la chaudière après être passées dans l'installation de filtration arrivent dans l'absorbeur (le ventilateur de tirage peut être avant l'absorbeur ou après l'absorbeur) . Lorsqu'elles contiennent des polluants tels que chlore, fluor en plus des polluants que sont SO₂ et les métaux lourds, elles traversent de préférence en premier un (ou des) étage(s) de prélavage AO dans lesquels ces polluants particuliers seront éliminés. Cet étage AO, ici unique, comporte, comme les autres étages, des rampes 27-0, une voie d'évacuation 28-0, une cuve agitée CO, des moyens de pompage. Son niveau est quelconque. Elle comporte une voie de soutirage 33 et, si elle utilise du lait, une arrivée de lait (ici la ligne 24). L'absorption de ces polluants dans 1' (ou les) étage(s) de prélavage se fait à l'eau (voire avec un lait de calcaire ou de chaux selon les teneurs et les résultats souhaités).

Les ions chlores se retrouvent dans le lait absorbant sous forme de chlorure de calcium très soluble. Une purge par la ligne de soutirage 33 permet de limiter la teneur du lait absorbant en ion chlorure à environ 50 g/l, ce qui correspond à la limite de solubilité du CaCl₂. La masse soutirée éliminant ces chlorures et les fluorures des fumées sera traitée à part.

Dans le premier étage d'absorption du SO₂ ou dans le premier étage de prélavage, si il existe, la température des fumées va chuter par évaporation d'eau. Les fumées se trouveront ainsi saturées en eau à une température de l'ordre de 50°C.

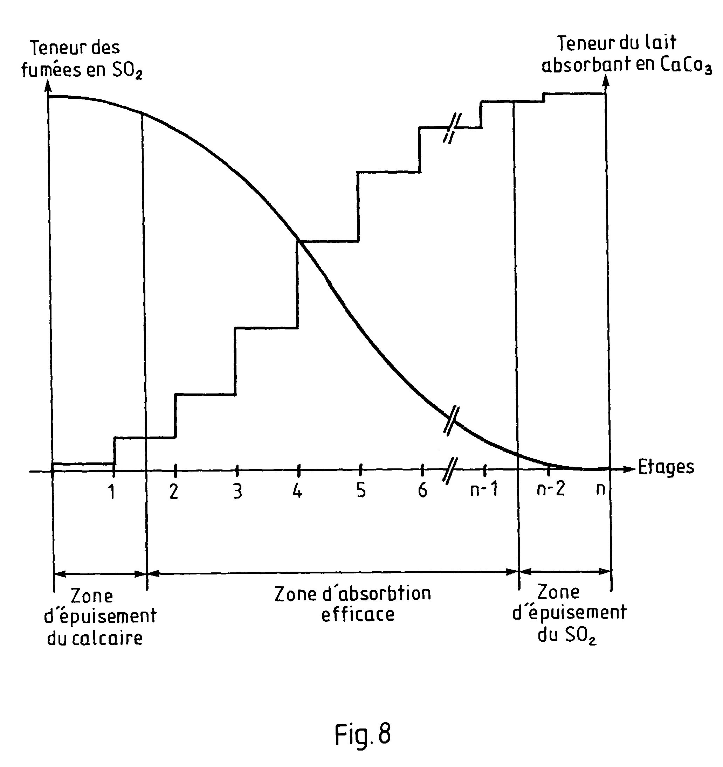

Dans les étages d'absorption du SO₂, la teneur en SO₂ des fumées et la teneur en calcaire du lait absorbant suivent des profils tels que représentés sur la figure 8.

L'absorbeur peut ainsi être découpé en trois tronçons :
- une première partie, dans laquelle la teneur des fumées en SO₂ est élevée, constitue la zone d'épuisement du calcaire (étages A0 et A1),
- une deuxième partie constitue la zone d'absorption efficace avec des teneurs en SO₂ et en calcaire élevées (étages A2 à An-1),
- une troisième partie constitue la zone d'épuisement du SO₂ par un lait contenant une forte concentration de calcaire.

D'étage en étage, la teneur en SO₂ des fumées baisse jusqu'à la valeur souhaitée. Les cloisons formant chicanes entre étages destinés à créer des turbulences dans les fumées et à les homogénéiser du point de vue teneur en SO₂ peuvent s'avérer très utiles. Après ce dernier étage, les fumées traversent un dévisiculeur 35 lavé à l'eau (aussi appelé éliminateur d'entraînement visiculaire et comprenant essentiellement des obstacles rencontrés à vitesse élevée sur lesquels coalescent les visicules de liquide entraînées par les gaz) pour éviter les entraînements de gouttelettes de lait absorbant.

Le lait absorbant depuis le dernier étage va s'enrichir en sulfite, bisulfite de calcium, lesquels seront oxydés à l'air en sulfate jusqu'au premier étage d'absorption du SO₂ où ce lait ne contiendra essentiellement que du sulfate de calcium, grâce à l'oxydation à l'air réalisée dans les cuves agitées et dans l'absorbeur avec l'oxygène contenu dans les fumées.

Depuis la cuve du premier étage, l'excédent de lait absorbant qui ne contient quasiment plus que du sulfate de calcium hydraté est soutiré pour être traité dans un atelier de récupération du gypse.

L'installation peut selon le cas inclure des équipements annexes en particulier un échangeur 36 destiné à réchauffer les fumées en sortie de l'absorbeur à partir de chaleur prise sur les fumées à l'entrée de l'absorbeur. Le réchauffage des fumées en sortie de l'absorbeur a pour but d'éviter les condensations dans le circuit en aval de l'absorbeur. Cet échangeur est par exemple constitué par des tubes traversant les deux caissons contigus.

L'absorbeur peut être construit en acier carbone revêtu intérieurement de caoutchouc (différents types de caoutchouc peuvent être utilisés et en particulier le caoutchouc butyle).

L'absorbeur pourra être calorifugé pour améliorer la tenue du revêtement caoutchouc.

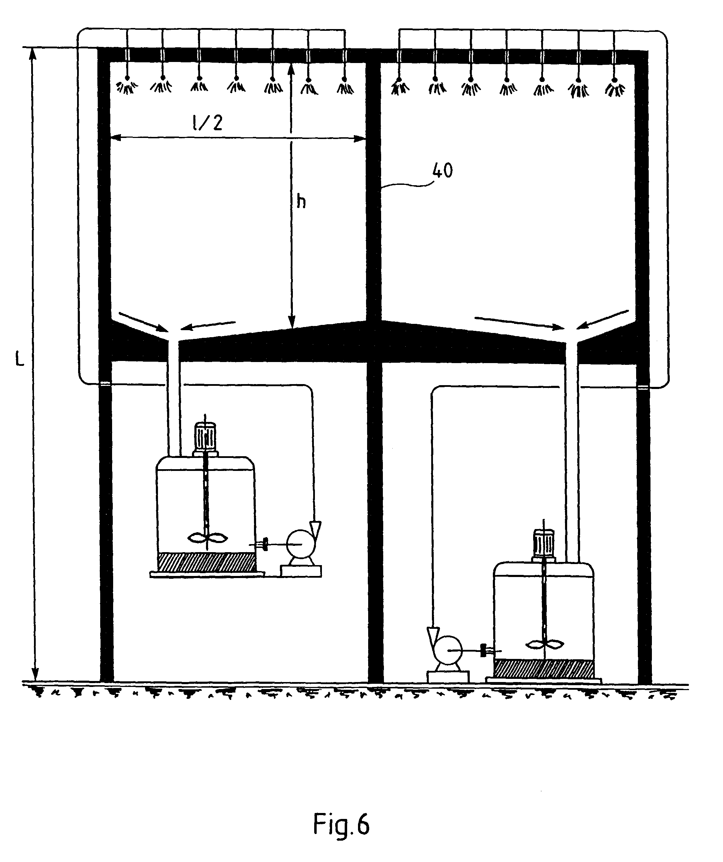

Dans l'exemple représenté (voir la figure 6) l'absorbeur ainsi constitué repose dans une charpente métallique montée sur pieds.

Les cuves et tuyauteries peuvent être en acier carbone revêtu caoutchouc ou en matériaux composites.

L'absorbeur peut également être construit tout en béton armé, l'intérieur étant revêtu de briques antiacide. Ceci est une solution offrant un prix compétitif et une bonne tenue dans le temps.

Dans une paroi de l'absorbeur se trouve une porte étanche (non représentée) permettant d'accéder facilement à l'intérieur de l'absorbeur pour inspection et maintenance.

Dans sa disposition préférentielle présentant le plus d'avantages d'implantation, l'installation se présente de la façon suivante :
- la chambre d'absorption est constituée d'un caisson parallélépipédique séparé en deux sur presque toute sa longueur par une paroi 40. Les fumées à épurer entrent d'un côté, font un aller le long du caisson puis un retour de l'autre côté de la paroi pour ressortir sur le même côté de l'absorbeur qu'elles y sont entrées (voir figure 5).

On appréciera que, si la cloison 40 est formée d'éléments mobiles et si des cloisons mobiles sont prévues pour pouvoir séparer des étages successifs, on peut moduler le nombre d'étages en service (par exemple la neutralisation des étages A4 et A5 conduit à un circuit A0-A3 ; A6-A9) ces cloisons mobiles sont par exemple des plaques coulissantes admettant, outre des positions d'obturation ou d'effacement, des positions intermédiaires dans lesquelles elles constituent les seuils 29.

La section transversale de l'absorbeur est représentée sur la figure 6. Les deux caissons d'absorption situés de part et d'autre de la paroi médiane se trouvent construits sur des poteaux. Sous les caissons se trouvent les cuves agitées de réception du lait absorbant ainsi que les pompes de recirculation de ce lait.

A titre d'exemple, pour l'épuration des fumées d'une centrale à charbon de 250 MW,
- la longueur L de chaque branche de U est de 32 m,
- la largeur ℓ de l'installation est de 13 m,
- une hauteur h sensiblement égale à ℓ/2, soit 6,5 m,
- le débit de recirculation de chaque boucle est d'environ 1100 m³/h.

On appréciera que l'invention, surtout dans ses versions optimales, présente de nombreux avantages :
- les chlorures et fluorures sont éliminés dès le début de l'absorbeur et ne polluent pas tout l'appareil ce qui permet une meilleure efficacité d'absorption du SO₂,
- une meilleure efficacité d'absorption est également obtenue grâce à la forte concentration en calcaire du lait absorbant dans les zones d'absorption efficace et d'épuisement du SO₂,
- le pH et le degré d'oxydation du sulfite de calcium peuvent être réglés à chaque étage à la valeur adéquate,
- on peut procéder à une épuration plus complète des fumées selon le nombre d'étages choisi,
- le fait que la surverse des bacs ne s'écoule pas directement vers l'unité de gypse (le gypse est pollué par le calcaire libre) permet des teneurs non négligeables de calcaire libre, et la disponibilité de celui-ci pour la réaction de désulfuration,
- on obtient un gypse contenant moins de calcaire résiduel donc de meilleure qualité. Ceci fait que l'on consomme le strict minimum de calcaire correspondant à la stoechiométrie des éléments à absorber,
- il peut y avoir dans les étages aval une concentration en calcaire et un pH élevés, ce qui augmente l'efficacité d'absorption, d'où un absorbeur petit (moindre temps de séjour) et un débit de circulation faible (avec des pompes petites),
- du fait de la meilleure efficacité du système, le débit d'arrosage des fumées est moindre, donc la consommation d'énergie de pompage est moindre (également du fait d'une hauteur de relevage du liquide moindre) ; le volume global de rétention est également plus faible ; on peut donc avoir à chaque étage des équipements banalisés de faible coût unitaire,
- l'injection d'air à chaque étage précipite les bisulfites doubles en sulfate de calcium insoluble, ce qui a pour effet d'augmenter la solubilité du calcaire (agent de réaction) et d'éviter que la cristallisation du gypse se fasse ailleurs que dans la cuve agitée, afin de prévenir les entartrages,
- il n'y a en principe pas de garnissage dans l'absorbeur, d'où un moindre risque de bouchage ; l'absorbeur peut facilement être construit en béton armé revêtu de briques antiacide ce qui est favorable pour le coût et pour la durée de vie des installations (le revêtement caoutchouc a une durée de vie de l'ordre de 5 ans et coûte très cher à remplacer),
- l'intérieur de l'absorbeur peut être très facilement inspecté. Il suffit d'arrêter l'installation et de balayer l'intérieur de l'absorbeur à l'air pendant quelques instants pour pouvoir y entrer. Les inspections fréquentes permettent de déceler très rapidement les moindres dégradations et d'y remédier,
- les rampes d'injection du lait absorbant peuvent être démontables par le dessus de l'absorbeur. Elles peuvent donc être inspectées facilement et donc très souvent,
- la conception de l'absorbeur conduit à des équipements plus petits en taille et moins sophistiqués. Le prix de l'ensemble de l'absorbeur est sensiblement moins cher que les absorbeurs classiques,
- la conception de l'absorbeur permet une adaptabilité aux besoins, soit en supprimant des paires d'étages juxtaposés, soit en en rajoutant, c'est-à-dire en modifiant simultanément la longueur des deux branches de U.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Installation d'épuration de fumées de chaudières, comportant :
- un conduit (21) de circulation de fumées s'étendant depuis une zone d'entrée de fumées (22) jusqu'à une zone de sortie de fumées (23) et comportant un étage amont d'absorption (A1) et un étage aval d'absorption (An),
- une boucle amont (B1) de circulation de lait absorbant comportant un élément amont de pulvérisation (27-1) situé en une partie haute de l'étage amont, une zone amont de réception (C1) communiquant avec une partie basse de l'étage amont, et des moyens amont de pompage (31-1) pour faire recirculer du lait depuis la zone amont de réception jusqu'à l'élément amont de pulvérisation,
- une boucle aval (Bn) de circulation de lait absorbant comportant un élément aval de pulvérisation (27-n) situé en une partie haute de l'étage aval, une zone aval de réception (Cn) communiquant avec une partie basse de cet étage aval, et des moyens aval de pompage (31-n) pour faire recirculer du lait depuis la zone aval de réception jusqu'à l'élément aval de pulvérisation,
- une ligne (24) d'introduction de calcaire/chaux connectée à la boucle aval,
- une ligne (25) d'injection d'air/oxygène connectée à la zone amont de réception,
- une ligne (26) de soutirage de lait connectée à cette zone amont de réception,
- une voie (30) d'évacuation de trop-plein partant de la zone aval de réception de la boucle aval à un niveau supérieur au niveau du lait dans la zone amont de réception et communiquant avec celle-ci,
cette installation étant caractérisée en ce que :
- le conduit de circulation de fumées est formé d'une pluralité d'au moins trois étages d'absorption comportant lesdits étages amont et aval et au moins un étage intermédiaire (A2, ... An-1), chaque étage d'absorption ayant une direction de circulation de fumées au moins approximativement horizontale,
- chaque étage intermédiaire comporte une boucle intermédiaire de circulation de lait comportant un élément intermédiaire de pulvérisation (27-2 ...) situé en partie haute, une zone intermédiaire de réception (C2 ...) communiquant avec une partie basse de cet étage intermédiaire, et des moyens intermédiaires de pompage (31-2) pour faire recirculer du lait depuis cette zone intermédiaire de réception jusqu'à cet élément de pulvérisation, cette zone intermédiaire de réception étant située sur la voie (30) d'évacuation de trop-plein et ayant un niveau de lait et une concentration en calcaire/chaux inférieurs au niveau de lait et à la concentration dans la boucle de circulation de l'étage qui le suit mais supérieurs au niveau et à la concentration en calcaire-chaux dans la boucle de circulation de l'étage qui le précède,
- chaque boucle intermédiaire est connectée à une ligne d'introduction de calcaire/chaux et à une ligne d'injection d'air/oxygène.

2. Installation selon la revendication 1, caractérisée en ce que le conduit (21) de circulation de fumées est globalement horizontal, lesdits étages d'absorption étant disposés sensiblement au même niveau.

3. Installation selon la revendication 2, caractérisée en ce que le conduit (21) de circulation de fumées a une forme globale en U.

4. Installation selon la revendication 3, caractérisée en ce qu'un échangeur thermique (36) est en communication thermique avec les zones d'entrée et de sortie de fumées.

5. Installation selon la revendication 3 Ou la revendication 4, caractérisée en ce que le conduit de circulation de fumées comporte deux branches adjacentes séparées par une paroi (40).

6. Installation selon l'une quelconque des revendications 1 à 5, caractérisée en ce que chaque zone de réception comporte des moyens d'agitation (32-1 ... 32-n).

7. Installation selon l'une quelconque des revendications 1 à 6, caractérisé en ce que chaque zone de réception est connectée à la ligne d'introduction de calcaire/chaux et à la ligne d'injection d'air/oxygène.

8. Installation selon l'une quelconque des revendications 1 à 7, caractérisée en ce qu'un étage de prélavage est prévu entre la zone d'entrée et l'étage amont d'absorption, cet étage de prélavage comportant une boucle de recirculation avec un moyen de pulvérisation, une zone de rétention connectée à une source d'eau et une source de calcaire/chaux et des moyens de pompage.

9. Installation selon l'une quelconque des revendications 1 à 8, caractérisée en ce que chaque zone de réception est située sensiblement à la verticale sous l'étage auquel elle est connectée.

10. Installation selon l'une quelconque des revendications 1 à 9, caractérisée en ce que le conduit de circulation est monté sur pilotis au-dessus du niveau du sol.
